# EUROPÄISCHE PATENTSCHRIFT

(11) **EP 0 849 057 B1**
(45) Veröffentlichungstag und Bekanntmachung des Hinweises auf die Patenterteilung: **04.10.2001**
(21) Anmeldenummer: 97121806.0
(22) Anmeldetag: 11.12.1997
(51) Int. Cl.: A01G 17/02, A01G 1/06

(54) **Maschine und Verfahren zur Oberflächenbearbeitung von Länglichen Gegenständen**
Apparatus and method for surface treatment of elongated articles
Procédé et dispositif pour l'usinage de surface d'articles allongés

(30) Priorität: 17.12.1996 DE 19652510
(43) Veröffentlichungstag der Anmeldung: 24.06.1998
(73) Patentinhaber: Peter Auer GmbH, 78262 Gailingen (DE); Auer, Martin, 8215 Hallau (CH)
(72) Erfinder: Auer, Martin, Dipl.Ing., 8215 Hallau (CH); Auer, Peter, Ing., 8475 Ossingen (CH)
(74) Vertreter: Blumbach, Kramer & Partner GbR

(56) Entgegenhaltungen:
- EP-A- 0 374 063
- FR-A- 2 498 417
- FR-A- 2 536 693
- FR-A- 2 684 842
- US-A- 1 390 218
- US-A- 2 710 417

## Beschreibung

Die Erfindung bezieht sich auf eine Maschine zur Oberflächenbearbeitung von länglichen Gegenständen, welche Knospen aufweisen, insbesondere Rebentrieben, nach dem Oberbegriff des Anspruchs 1 sowie auf ein Verfahren zur Knospenentfernung von Unterlagentrieben.

Zur Veredelung von Reben wird ein Edelreis auf einen Trieb einer sogenannten Unterlagensorte gepfropft. Die so gebildete Jungpflanze bildet an ihrem freien Ende Wurzeln, und die aufgepfropfte Edeltraubensorte treibt aus, wobei die Unterlage selbst keine Knospen aufweisen soll. Diese als Augen bezeichneten Knospen der Unterlage müssen entfernt werden, was als Blenden bezeichnet wird.

Die Knospen der Unterlage sitzen in Nischen oberhalb der Knoten und werden gewöhnlich von Hand entfernt. Bekannt ist auch das Zerstören der Knospen durch eine Hitzequelle (FR 2 684 842 A1). Dieses Verfahren ist gegenüber dem Entfernen durch Hand weniger gut geeignet, da es zu undifferenziert arbeitet und nebst Zerstörung der Knospen oft auch die Rinde der Unterlage beschädigt.

Die Bearbeitung von Rebentrieben mit einer Maschine nach dem Oberbegriff des Anspruchs 1 und des Anspruch 25 ist aus der FR 2 536 693 A1 bekannt. Diese arbeitet mittels rotierender Messer oder Sägen, die tangential zur Oberfläche des Triebes schneiden. Bei der Entfernung von Knospen besteht eine erhöhte Gefahr der Beschädigung der Unterlage an den Knoten, die unregelmäßig von der Unterlage vorstehen. Vermeidet man die Beschädigung der Knoten, kommt es häufig vor, daß einzelne Knospen der Unterlagen nicht erfaßt werden, was zu nachträglicher Handarbeit zwingt.

Die Bearbeitung von Rebentrieben mit einem Umlaufschnitt ist aus der FR 2 498 417 bekannt. Das Werkzeug besteht aus einer rohrförmigen Fräse oder Säge, mit der wegstrebende Seitenzweige abgeschnitten werden, Knospen jedoch, die in Nischen des Holzes sitzen, nicht entfernt werden können. Zur Entfernung von Ranken, die an den Knoten von Rebentrieben gegenüber den Knospen sitzen, ist es bekannt, Riemen oder Lederstreifen rotieren zu lassen, wodurch solche Ranken abbrechen. Knospen lassen sich auf diese Weise nicht entfernen.

Mit der neuen Maschine sollen sich nicht nur Reben, sondern auch andere längliche Gegenstände mit Knospen oder dergleichen bearbeiten lassen. Diese Gegenstände können aus der Natur stammen oder Kunstprodukte sein.

Der Erfindung liegt die Aufgabe zugrunde, eine Maschine bzw. ein Verfahren zur Oberflächenbearbeitung von länglichen, Knospen aufweisenden Gegenständen zu schaffen, mit der unerwünschte Knospen, insbesondere von Rebentrieben, auf materialschonende, effiziente und einfach zu überwachende Weise entfernt werden können, und die darüber hinaus auch andere längliche Gegenstände einer Säuberung oder Oberflächenbehandlung zu unterziehen vermag.

Die gestellte Aufgabe wird aufgrund der Merkmale des Anspruchs 1 bzw. 25 gelöst und durch die weiteren Merkmale der Unteransprüche ausgestaltet und weiterentwickelt.

Bei der Erfindung werden die länglichen Gegenstände mit Fördermodulen durch ein oder mehrere Rotationsbürstenpaare gefördert, und die Bürsten sind so ausgelegt, daß sie die Knospen der Rebentriebe "wegradieren", ohne die Rinde und den Holzkörper zu beschädigen. Die Bürsten, ihre Drehgeschwindigkeit und die Durchlaufgeschwindigkeit der länglichen Gegenstände werden an das spezielle zu bearbeitende Gut angepaßt. Dies gilt auch für den Abstand der Bürsten voneinander. Der Arbeitsablauf kann weitgehend automatisch erfolgen, d. h. ohne besondere Anforderungen an das Bedienungspersonal. Neben der Entfernung der Knospen werden die Triebe auch von anhaftender Erde, Schlamm und dergleichen gesäubert. Die Vereinigung von zwei bisher getrennten Arbeitsgängen zu einem einzigen führt zu wesentlicher Zeit- und Kostenreduzierung.

Die Maschine ist modulmäßig aufgebaut und umfaßt zweckmäßigerweise mehrere Fördermodule und Rotationsbürstenpaare. Die Rotationsbürsten werden zweckmäßigerweise um den Umfang der länglichen Gegenstände verteilt angeordnet, um die gesamte zu bearbeitende Oberfläche mit gleicher Intensität zu erfassen, d. h. im Falle von Rebenunterlagen alle Knospen zu entfernen. Die Fördermodule sind so einstellbar und ausgestaltet, daß es zu einer kontinuierlichen Vorschubgeschwindigkeit der zu bearbeitenden länglichen Gegenstände kommt. Dickenschwankungen der Gegenstände können dadurch ausgeglichen werden, daß an den Förderwalzen elastische Gummilamellen angebracht sind, die den Spalt zwischen den Förderrollen variabel gestalten. Es können auch Förderwalzen oder -rollen mit Schaumstoffpolstern an der Oberfläche verwendet werden, mit denen ebenfalls die Unterlagentriebe weitgehend schlupflos vorgeschoben werden können.

Die Einwirkung der Rotationsbürsten hängt von dem Bürstenmaterial und dem Abstand der Bürsten von der Durchlaufachse ab. Zur Bearbeitung unterschiedlicher Gegenstände, auch unterschiedlich starker Unterlagentriebe, kann der Abstand der Bürsten von der Durchlaufachse eingestellt werden. Außerdem können die einzelnen Bürsten leicht austauschbar auf ihren Antriebswellen angeordnet sein. In Ergänzung der Bearbeitung können einzelne Bürsten auch durch Schleif- oder Polierscheiben ersetzt werden.

Nach einer Weiterentwicklung der Erfindung ist der Bearbeitungsmaschine eine automatische Zuführeinrichtung für längliche Gegenstände vorgeschaltet und eine Zähleinrichtung für bearbeitete Gegenstände zugeordnet. Im Falle von Rebentrieben kann auch eine Ablängvorrichtung sowie eine Abpackvorrichtung für bearbeitete Triebe der Bearbeitungsmaschine nachgeschaltet sein.

Ein Ausführungsbeispiel der Erfindung wird anhand der Zeichnung beschrieben. Dabei zeigt:
- Fig. 1: eine Seitenansicht, teilweise aufgeschnitten, der Unterlagenbearbeitungsmaschine,
- Fig. 2: eine Draufsicht auf die Unterlagenbearbeitungsmaschine,
- Fig. 3: eine Seitenansicht, teilweise aufgeschnitten, eines Fördermoduls,
- Fig. 4: einen Schnitt quer zur Förderrichtung durch ein Fördermodul.

Die Hauptbaugruppen der Unterlagenbearbeitungsmaschine sind ein Rahmen 3, drei Fördermodule 4 und vier Rotationsbürsten 20, 20a, 21, 21a in zwei Paaren. Jeweils mittig durch die Maschine, durch die Bürstenpaare 20/20a und 21/21a und durch die Fördermodule 4 verläuft eine gedachte Achse 32, auf welcher die Triebe 1 die Maschine durchlaufen. Die zu bearbeitenden Triebe 1 haben in gewissen Abständen (sog. Internodien), die je nach Sorte variieren, Knoten 2, an welchen die abzubürstenden Knospen (Augen) sitzen.

Die Rotationsbürstenpaare 20/20a und 21/21a sind zueinander um 90° gedreht jeweils zwischen zwei Fördermodulen 4 angeordnet. Die wechselseitige Anordnung der Bürsten- und Fördermodule gewährleistet eine gleichmäßige Bearbeitung auf der ganzen Länge des Triebs, insbesondere auch im Bereich der Enden.

Die Anzahl der verwendeten Rotationsbürstenpaare und Fördermodule ist variierbar. In einer vereinfachten Form der Erfindung kann ein einziges Fördermodul 4 mit einem einzigen Rotationsbürstenpaar 20/20a kombiniert sein. Um die Arbeitsqualität zu erhöhen, können mehrere Rotationsbürstenpaare verwendet werden. Die jeweilige Winkelstellung der Bürstenpaare zueinander und um die Durchlaufachse 32 verringert sich bei höherer Anzahl der verwendeten Rotationsbürstenpaare, womit der Umfang der Triebe noch gleichmäßiger bearbeitet wird.

Die einzelnen Rotationsbürsten 20 + 20a sowie 21 + 21a werden über Wellen oder Naben 25, 25a je durch einen Motor 26 in Mit- oder Gegenlaufrichtung zur Förderrichtung des Triebes 1 angetrieben. Der Abstand zwischen den einzelnen Bürsten 21 + 21a sowie 20 + 20a bzw. der Bearbeitungsspalt kann variiert werden, wodurch für jedes zu bearbeitende Material eine optimale Triebdurchlaßweite und Bearbeitungsintensität erzielt werden kann.

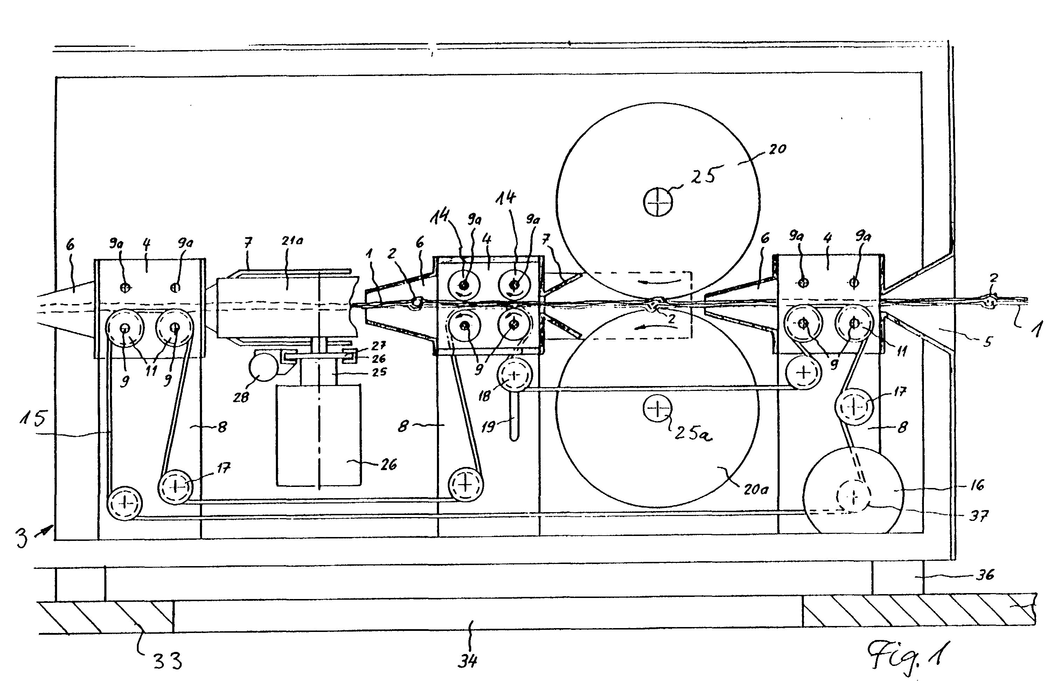

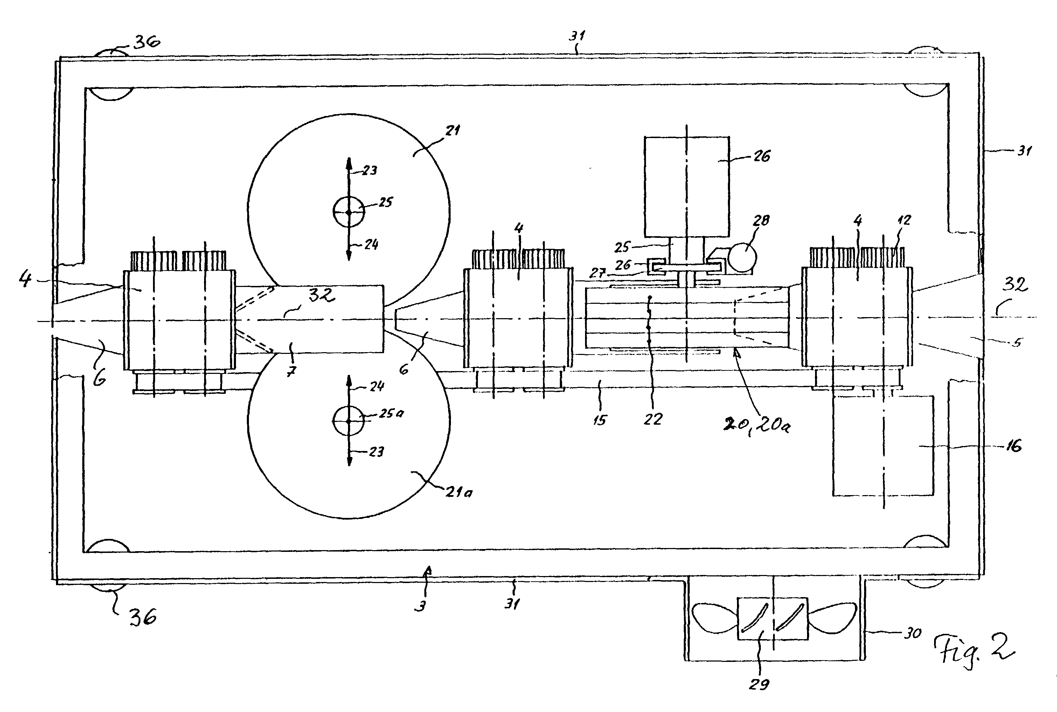

Wie in Fig. 1 und 2 gezeichnet, sind die Bürstennaben 25, 25a je auf getrennten Schiebeplatten 27 gelagert, welche in einer Linearführung 26 gegeneinander oder voneinander weg verschiebbar und in eingestellten Lagen festlegbar sind. Bewirkt wird dies durch eine nicht gezeichnete, im Rahmen 3 gelagerte Spindel mit einem Links- und einem Rechtsgewinde. Die zugehörigen Spindelmuttern mit Links- und Rechtsgewinde sitzen je auf einer der beiden Schiebeplatten 27. Durch Drehen der Spindel mittels Handrad 28 bewegen sich die Bürstennaben gleichzeitig in Richtung 23 von der Achse 32 weg oder in Richtung 24 darauf zu, wodurch der durchlaufende Trieb 2 einen größeren oder kleineren Bearbeitungsspalt vorfindet. Dadurch kann die Abrasionswirkung der Rotationsbürsten vermindert oder verstärkt werden. Indem die Drehzahl der Motoren 26 variiert wird, kann die Arbeitswirkung der Rotationsbürsten zusätzlich beeinflußt werden.

In einer Ausführungsform der Erfindung enthalten die Rotationsbürsten 20, 20a, 21, 21a jeweils mehrere dünne Elementscheiben 22, die gemeinsam zu einer dickeren Rotationsbürste zusammenmontiert werden. Die Elementbauweise hat den Vorteil, daß die inneren, in Nähe der Achse 32 arbeitenden und jeweils eher abgenutzten Elemente 22 mit den weniger abgenutzten, äußeren Elementscheiben vertauscht werden können, wodurch die Lebensdauer der Rotationsbürsten insgesamt verlängert wird. Als Borstenmaterial der Rotationsbürsten kommen unterschiedliche Materialien und Dimensionen in Betracht.

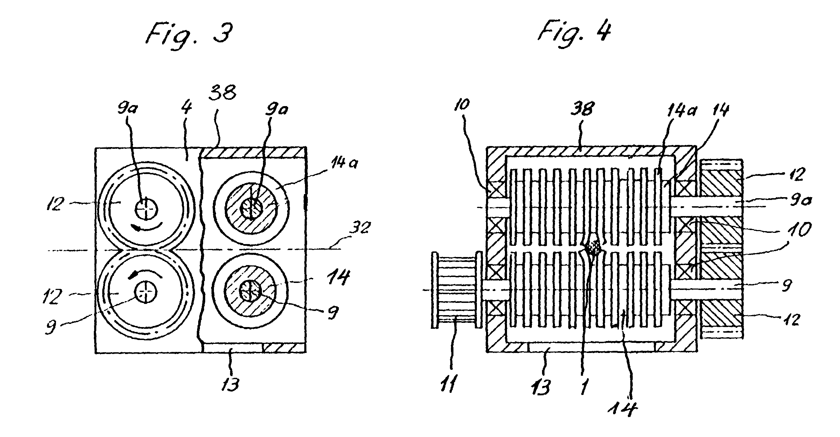

Wie am besten aus Fig. 3 und 4 ersichtlich, enthalten die Fördermodule 4 ein Gehäuse 38, worin in Querrichtung zur Triebachse 32 je zwei Wellen oder Achsen 9, 9a, in Kugellagern 10 lagernd, angeordnet sind. Die Fördermodule 4 sind auf Haltern 8 (Fig. 1) montiert, die ihrerseits am Rahmen 3 befestigt sind.

Die Wellen oder Achsen 9 bzw. 9a bilden gemeinsam ein Förderachsenpaar. Sie sind über zwei gegenseitig im Eingriff befindliche Zahnräder 12 miteinander gekoppelt, wodurch eine vom Riemenzahnrad 11 ausgehende Drehbewegung schlupflos von Achse 9 auf die Partnerachse 9a, die dadurch eine gegenläufige Drehbewegung erhält, übertragen wird. Auf den Achsen 9, 9a mitlaufend gekoppelt ist je eine Förderwalze 14 mit elastischen Lamellen 14a. Die Lamellen 14a sind radial zu der Förderwalze 14 angeordnet, es ist aber auch eine axiale Anordnung möglich. Die auf den Achsen 9 sitzenden Riemenräder 11 werden mittels eines Motors 16 (Fig. 2) und eines Zahnriemens 15 angetrieben. Der Zahnriemen 15 umschlingt die Riemenräder 11, mehrere Umlenkrollen 17, eine Spannrolle 18 und ein Motorantriebsrad 37 in der in Fig. 1 gezeichneten Art, wodurch sämtliche Fördermodulachsen 9 identische Drehrichtung und Drehzahl erhalten.

Die dergestaltige Ausführung bewirkt, daß die beiden Achsen 9, 9a eines Förderwalzenpaares je eine gegenläufige Drehbewegung zueinander erhalten, wodurch der zwischen den beiden Förderwalzen 14 durchführende Trieb 1 auf der Achse 32 vorgeschoben wird. Die elastischen Lamellen 14a und Walzenkörper 14 gewährleisten eine sichere Adhäsion und einen weitgehend schlupflosen Vortrieb des Triebes 1 unter Ausschluß jeglicher Verletzungs- und Quetschgefahr für die Triebe 1. Die dergestaltige Ausführung hat gleichzeitig den Vorteil, daß Triebe unterschiedlichsten Kalibers, Wuchsregelmäßigkeit und Internodienlänge gefördert werden können, ohne daß irgendwelche Verstellungen nötig sind.

In einer Ausführungsform der Erfindung besitzt der Motor 16 für den Antrieb des Zahnriemens 15 eine stufenlos variierbare Drehzahlregelung, womit den Trieben 1 die gewünschte Durchlaufgeschwindigkeit erteilt werden kann.

Bei der bevorzugten Ausführungsform der Erfindung sind je in einem Fördermodul zwei Förderwalzenpaare 14 mit den zugehörigen Achsen 9, 9a angeordnet. Für den Fall, daß die Adhäsionswirkung der Förderwalzen 14 verstärkt oder vermindert werden soll, kann die Anzahl der verwendeten Förderwalzenpaare in einem Fördermodul vermehrt oder reduziert werden.

Damit der Trieb 1 genau auf der vorbestimmten Achse 32 durch die Maschine hindurchgeleitet wird, besitzt jedes Fördermodul 4 je einen Einlauftrichter 5 oder Verbindungstrichter 7 und einen Auslauftrichter 6. Die Einlauf- bzw. die Auslauföffnungen sind dabei so bemessen, daß Triebe unterschiedlichsten Kalibers einerseits von der vorbestimmten Durchlaufachse 32 nicht seitlich abweichen können, und andererseits von den Rotationsbürsten einwandfrei erfaßt werden.

Die Fördermodule 4 besitzen an ihrer Unterseite eine Öffnung 13, damit die sich lösenden Schmutz-, Knospen- und Faserteile herausfallen können. Dadurch sind die Fördermodule 4 selbstreinigend und vor Verstopfung geschützt. Der Maschinenrahmen 3 ist an seiner Unterseite offen, so daß das abgebürstete Material direkt durch eine Öffnung 34 im Tisch 33 fällt, wo es entsorgt werden kann.

Zwecks Eliminierung der Verletzungsgefahr und als Schutz gegen die Staubentwicklung ist der Rahmen 3 an allen zugänglichen Seiten mit Abdeckungen 31 versehen. Zur optischen Überwachung der Arbeitsweise der erfindungsgemäßen Maschine sind die Abdeckungen vorzugsweise aus einem klarsichtigen Material gefertigt.

In einer Ausführungsform der Erfindung ist außerhalb oder innerhalb des Rahmens 3 eine Beleuchtung angebracht, welche die optische Überwachung erleichtert.

Um den entstehenden Abrasionsstaub abzufahren und die Sichtkontrolle zu verbessern, ist in die Abdeckung 31 ein Absaugventilator 29 mit einem Schlauchstutzen 30 eingelassen. Letzterer ermöglicht den Anschluß eines nicht gezeichneten Absaugschlauchs, womit der anfallende Abrasionsstaub fortwährend vom Arbeitsort weggeleitet werden kann.

Zur Absorption von Vibrationen ist die Maschine auf Gummielementen 36 gelagert.

Da beim anschließenden Veredelungsvorgang kürzere Triebstücke als das Ausgangsmaterial benötigt werden, ist in einer Ausführungsform der Erfindung an der Austrittsseite eine nicht gezeichnete, automatische Triebablängvorrichtung vorgesehen. Diese arbeitet z. B. derart, daß die Triebe 1 gegen einen Anschlag laufen und dann die Betätigung einer Schere oder eines Fallmessers auslösen, welche das hintere Ende des Triebes abschneidet. Der Trieb fällt dann in einen Behälter, wobei er gezählt werden kann.

In einer weiteren Ausführungsform der Erfindung ist am Rahmen 3 beim Triebeinführungstrichter 5 eine nicht gezeichnete, automatische Beschickungseinrichtung für unbearbeitete Triebe 1 angeordnet. Die Beschickungseinrichtung entnimmt die Triebe 1 einzeln aus einem Lager und schiebt den vereinzelten Trieb in den Trichter 5 der Bearbeitungsmaschine. Das Lager kann eine trichterförmige Verengung aufweisen, in der eine Vereinzelungswelle mit Aufnahmetaschen für die Triebe angeordnet ist, wobei durch taktmäßiges Drehen der Vereinzelungswelle jedesmal ein Trieb aus dem Lager entnommen werden kann.

An der Triebaustrittstelle/Trichter 6 ist am Rahmen 3 entweder separat oder in Kombination mit der Ablängvorrichtung 35 eine nicht gezeichnete, automatische Abpackeinrichtung für bearbeitete Triebe 1 angeordnet. Dadurch wird ein vollautomatisierter Betrieb ohne Bedienungspersonal ermöglicht.

In einer weiteren Form der Erfindung ist an geeigneter Stelle eine nicht gezeichnete Zähleinrichtung für bearbeitete Triebe 1 angeordnet.

## Patentansprüche

1. Maschine zur Oberflächenbearbeitung von länglichen Gegenständen, welche Knospen aufweisen, insbesondere Rebentrieben, mit folgenden Merkmalen:
ein Rahmengestell (3), das eine Durchlaufachse (32) bestimmt;
wenigstens ein Fördermodul (4), das wenigstens ein Förderwalzenpaar (14) mit einem Förderspalt dazwischen enthält und mit diesen entlang der Durchlaufachse (32) angeordnet ist;
wenigstens ein Werkzeug, das den länglichen Gegenstand bearbeitet, der sich entlang der Durchlaufachse bewegt,
**dadurch gekennzeichnet,**
**daß** das Werkzeug wenigstens zwei Bürsten (20, 20a) enthält, die einen Bearbeitungsspalt zwischen sich bestimmen, der entlang der Durchlaufachse (32) angeordnet ist, wobei die Bürsten radierend entlang des länglichen Gegenstandes (1) streichen und die Knospen entfernt werden.

2. Maschine nach Anspruch 1,
**dadurch gekennzeichnet, daß** zwei oder mehrere Fördermodule (4) vorgesehen sind.

3. Maschine nach Anspruch 1 oder 2,
**dadurch gekennzeichnet, daß** zwei oder mehrere Rotationsbürstenpaare (20, 20a; 21, 21a) vorgesehen sind.

4. Maschine nach Anspruch 3,
**dadurch gekennzeichnet, daß** die Rotationsbürstenpaare (20, 20a; 21, 21a) hinsichtlich der Durchlaufachse (32) drehversetzt angeordnet sind.

5. Maschine nach Anspruch 3,
**dadurch gekennzeichnet, daß** zwischen den Rotationsbürstenpaaren (20, 20a; 21, 21a) und den Fördermodulen (4) Einlauf-, Verbindungs- und Auslauftrichter (5, 6, 7) vorgesehen sind.

6. Maschine nach einem der Ansprüche 1 bis 5,
**dadurch gekennzeichnet, daß** der Bearbeitungsspalt zwischen dem/den Rotationsbürstenpaaren durch Austauschbarkeit der Bürsten (20, 20a; 21, 21a) einstellbar ist.

7. Maschine nach einem der Ansprüche 1 bis 6,
**dadurch gekennzeichnet, daß** der Achsabstand der Rotationsbürstenpaare verstellbar ist.

8. Maschine nach einem der Ansprüche 1 bis 7,
**dadurch gekennzeichnet, daß** die Rotationsbürstenpaare (20, 20a; 21, 21a) austauschbare Elementscheiben (22) aufweisen.

9. Maschine nach einem der Ansprüche 1 bis 8,
**dadurch gekennzeichnet, daß** jedes Rotationsbürstenpaar einen Einzelantrieb (25, 26) aufweist.

10. Maschine nach Anspruch 9,
**dadurch gekennzeichnet, daß** der Einzelantrieb (25, 26) hinsichtlich Drehzahl und Drehrichtung einstellbar ist.

11. Maschine nach einem der Ansprüche 1 bis 8,
**dadurch gekennzeichnet, daß** die Rotationsbürstenpaare einen gemeinsamen Antrieb aufweisen.

12. Maschine nach einem der Ansprüche 1 bis 11,
**dadurch gekennzeichnet, daß** die Fördermodule (4) einen gemeinsamen Antrieb mittels Zahnriemen (15), Kette oder dergleichen endlosen Kopplungselementen aufweisen.

13. Maschine nach einem der Ansprüche 1 bis 12,
**dadurch gekennzeichnet, daß** die Förderwalzen (14) eines Fördermoduls (4) über Zahnräder (12) miteinander verbunden sind.

14. Maschine nach einem der Ansprüche 1 bis 13,
**dadurch gekennzeichnet, daß** die Förderwalzen (14) der Förderwalzenmodule (4) mit elastischen Lamellen (14a) ausgestattet sind.

15. Maschine nach einem der Ansprüche 1 bis 14,
**dadurch gekennzeichnet, daß** die Förderwalzen (14) der Förderwalzenmodule (4) mit Schaumstoffpolstern ausgestattet sind.

16. Maschine nach einem der Ansprüche 1 bis 15,
**dadurch gekennzeichnet, daß** der Antrieb der Förderwalzen (14) hinsichtlich unterschiedlicher Geschwindigkeiten einstellbar ist.

17. Maschine nach einem der Ansprüche 1 bis 16,
**dadurch gekennzeichnet, daß** jedes Fördermodul (4) ein Gehäuse (38) mit einer Auslaßöffnung (13) für Abfall aufweist.

18. Maschine nach einem der Ansprüche 1 bis 17,
**dadurch gekennzeichnet, daß** das Rahmengestell (3) eine Abfallauslaßöffnung (34) aufweist.

19. Maschine nach einem der Ansprüche 1 bis 18,
**dadurch gekennzeichnet, daß** das Rahmengestell (3) eine Absaugeinrichtung (29, 30) aufweist.

20. Maschine nach einem der Ansprüche 1 bis 19,
**gekennzeichnet durch** eine Beleuchtungseinrichtung.

21. Maschine nach einem der Ansprüche 1 bis 20,
**gekennzeichnet durch** eine Ablängvorrichtung, welche die bearbeiteten länglichen Gegenstände (1) nach Verlassen der Bearbeitungsstufe in Stücke vorbestimmter Länge zerschneidet.

22. Maschine nach einem der Ansprüche 1 bis 21,
**gekennzeichnet durch** eine Zähleinrichtung, welche die bearbeiteten länglichen Gegenstände (1) zählt.

23. Maschine nach einem der Ansprüche 1 bis 22,
**gekennzeichnet durch** eine automatisierte Beschickungsvorrichtung für unbearbeitete längliche Gegenstände, welche solche Gegenstände einzeln einem Lager entnimmt und in die Bearbeitungsstufe einschiebt.

24. Maschine nach einem der Ansprüche 1 bis 15,
**gekennzeichnet durch** eine automatische Abpackvorrichtung für bearbeitete Gegenstände, welche eine Umhüllung um die Gegenstände legt.

25. Verfahren zur Knospenentfernung von zu veredelnden Unterlagentrieben, insbesondere Reben, mit dem Schritt:
a) die Unterlagentriebe (1) werden nacheinander in den Spalt von Förderwalzenpaaren (14) gebracht, welche die Unterlagentriebe (1) entlang einer Durchlaufachse (32) vorschieben; und dem kennzeichnenden Schritt:
b) entlang der Durchlaufachse (32) angeordnete Rotationsbürsten (20, 20a) radieren die Knospen (2) des jeweilig geförderten Unterlagentriebes (1) ab.

## Claims

1. A machine for surface treatment of elongate articles with buds, particularly vine shoots, the machine having the following features:
a frame (3) defining a through-feed axis (32);
at least one conveyor unit (4) containing at least one pair of conveyor rollers (14) with a gap in between, the gap being disposed along the through-feed axis (32) and
at least one tool for processing the elongate article moving along the through-feed axis, **characterised in that**
the tool contains at least two brushes (20, 20a) defining a processing gap between them, the gap being disposed along the through-feed axis (32), the brushes extending along the elongate article (1) and shaving it and removing the buds.

2. A machine according to claim 1, **characterised in that** two or more conveyor units (4) are provided.

3. A machine according to claim 1 or 2, **characterised in that** two or more pairs of rotary brushes (20, 20a; 21, 21a) are provided.

4. A machine according to claim 3, **characterised in that** the pairs of rotary brushes (20, 20a; 21, 21a) are offset in rotation relative to the through-feed axis (32).

5. A machine according to claim 3, **characterised in that** inlet, connecting and outlet funnels (5, 6, 7) are provided between the pairs of rotary brushes (20, 20a; 21, 21a) and the conveyor units (4).

6. A machine according to any of claims 1 to 5, **characterised in that** the processing gap between the pair or pairs of rotary brushes is adjustable by interchangeability of the brushes (20, 20a; 21, 21a).

7. A machine according to any of claims 1 to 6, **characterised in that** the axial distance between the pairs of rotary brushes is adjustable.

8. A machine according to any of claims 1 to 7, **characterised in that** the pairs of rotary brushes (20, 20a; 21, 21a) comprise interchangeable component discs (22).

9. A machine according to any of claims 1 to 8, **characterised in that** each pair of rotary brushes has an individual drive (25, 26).

10. A machine according to claim 9, **characterised in that** the individual drive (25, 26) is adjustable in speed and direction of rotation.

11. A machine according to any of claims 1 to 8, **characterised in that** the pairs of rotary brushes have a common drive.

12. A machine according to any of claims 1 to 11, **characterised in that** the conveyor units (4) have a common drive via a toothed belt (15), chain or similar endless coupling elements.

13. A machine according to any of claims 1 to 12, **characterised in that** the rollers (14) of a conveyor module (4) are interconnected by gearwheels (12).

14. A machine according to any of claims 1 to 13, **characterised in that** the rollers (14) of the conveyor-roller units (4) are equipped with resilient slats (14a).

15. A machine according to any of claims 1 to 14, **characterised in that** the rollers (14) of the conveyor-roller units (4) are equipped with foam pads.

16. A machine according to any of claims 1 to 15, **characterised in that** the drive of the conveyor rollers (14) is adjustable at different speeds.

17. A machine according to any of claims 1 to 16, **characterised in that** each conveyor unit (4) has a casing (38) with an outlet opening (13) for waste.

18. A machine according to any of claims 1 to 17, **characterised in that** the frame (3) has an outlet opening (34) for waste.

19. A machine according to any of claims 1 to 18, **characterised in that** the frame (3) has a suction extraction device (29, 30).

20. A machine according to any of claims 1 to 19, **characterised by** a lighting means.

21. A machine according to any of claims 1 to 20, **characterised by** a cutting-to-length device which cuts the elongate articles (1) into pieces of predetermined length after they have been processed and left the processing stage.

22. A machine according to any of claims 1 to 21, **characterised by** a counter which counts the processed elongate articles (1).

23. A machine according to any of claims 1 to 22, **characterised by** a device for automatically loading non-processed elongate articles, the device taking the said articles individually from a store and inserting them into the processing stage.

24. A machine according to any of claims 1 to 15, **characterised by** an automatic device for packing processed articles and placing a wrapping round them.

25. A method of removing buds from stock shoots, particularly vines, for grafting, with the following steps:
a) the stock shoots (1) are successively placed in the gap between pairs of conveyor rollers (14) which move the shoots (1) along a through-feed axis (32), and the characterising step:
b) rotary brushes (20, 20a) disposed along the through-feed axis (32) shave off the buds (2) from each conveyed stock shoot (1).

## Revendications

1. Machine pour le traitement de surface d'objets allongés qui présentent des bourgeons, en particulier des rameaux de vigne, possédant les caractéristiques suivantes :
une charpente de bâti (3) qui détermine un axe de passage (32) ;
au moins un module de transport (4) qui renferme au moins une paire de tambours de transport (14) qui forme une fente de transport entre eux et est agencée pour placer cette fente le long de l'axe de passage (32);
au moins un outil qui traite l'objet allongé, qui circule le long de l'axe de passage,
**caractérisée en ce que** l'outil comprend au moins deux brosses (20, 20a) qui forment entre elles une fente de traitement qui est disposée le long de l'axe de passage (32), les brosses frottant avec effet de gommage le long de l'objet allongé (1) et les bourgeons étant ainsi éliminés.

2. Machine selon la revendication 1,
**caractérisée en ce qu'**il est prévu deux ou plus de deux modules de transport (4).

3. Machine selon la revendication 1 ou 2,
**caractérisée en ce qu'**il est prévu deux ou plus de deux paires de brosses rotatives (20, 20a ; 21, 21a).

4. Machine selon la revendication 3,
**caractérisée en ce que** les paires de brosses rotatives (20, 20a ; 21, 21a) sont disposées de façon décalées angulairement par rapport à l'axe de passage (32).

5. Machine selon la revendication 3,
**caractérisée en ce que** des entonnoirs d'entrée, de liaison et de sortie (5, 6, 7) sont prévus entre les paires des brosses rotatives (20, 20a ; 21, 21a) et les modules de transport (4 ).

6. Machine selon une des revendications 1 à 5,
**caractérisée en ce que** la fente de traitement entre les brosses rotatives de la paire ou des paires de brosses rotatives peut être réglée grâce à l'interchangeabilité des brosses (20, 20a ; 21, 21a).

7. Machine selon une des revendications 1 à 6,
**caractérisée en ce que** la distance à l'axe des paires de brosses rotatives est réglable.

8. Machine selon une des revendications 1 à 7,
**caractérisée en ce que** les paires de brosses rotatives (20, 20a ; 21, 21a) présentent des disques élémentaires interchangeables (22).

9. Machine selon une des revendications 1 à 8,
**caractérisée en ce que** chaque paire de brosses rotatives représente un entraînement individuel (25, 26).

10. Machine selon la revendication 9,
**caractérisée en ce que** l'entraînement individuel (25, 26) est réglable en vitesse de rotation et en sens de rotation.

11. Machine selon une dès revendications 1 à 8,
**caractérisée en ce que** les paires de brosses rotatives présentent un entraînement commun.

12. Machine selon une des revendications 1 à 11,
**caractérisée en ce que** les modules de transport (4) présentent un entraînement commun réalisé au moyen de courroies crantées (15), de chaînes ou d'éléments d'accouplement sans fin analogues.

13. Machine selon une des revendications 1 à 12,
**caractérisée en ce que** les tambours de transport (14) d'un module de transport (4) sont accouplés entre eux par des roues dentées (12).

14. Machine selon une des revendications 1 à 13,
**caractérisée en ce que** les tambours de transport (14) des modules de tambours de transport (4) sont équipés de lamelles élastiques (14a).

15. Machine selon une des revendications 1 à 14,
**caractérisée en ce que** les tambours de transport (14) des modules de tambours de transport (4) sont équipés de coussins en mousse.

16. Machine selon une des revendications 1 à 15,
**caractérisée en ce que** l'entraînement des tambours de transport (14) est réglable pour obtenir différentes vitesses.

17. Machine selon une des revendications 1 à 16,
**caractérisée en ce que** chaque module de transport (4) présente un carter (38) muni d'une ouverture de sortie (13) pour les déchets.

18. Machine selon une des revendications 1 à 17,
**caractérisée en ce que** la charpente de bâti (3) présente une ouverture (34) de sortie de déchets.

19. Machine selon une des revendications 1 à 18,
**caractérisée en ce que** la charpente de bâti (3) présente un dispositif d'aspiration (29, 30).

20. Machine selon une des revendications 1 à 19,
**caractérisée par** un dispositif d'éclairage.

21. Machine selon une des revendications 1 à 20,
**caractérisée par** un dispositif de coupe à longueur qui coupe les objets allongés (1) traités en morceaux d'une longueur prédéterminée lorsqu'ils ont quitté l'étage de traitement.

22. Machine selon une des revendications 1 à 21,
**caractérisée par** un dispositif compteur qui compte les objets allongés (1) traités.

23. Machine selon une des revendications 1 à 22,
**caractérisée par** un dispositif de chargement automatique pour les objets allongés non traités, qui prélève ces objets individuellement dans un magasin et les introduit dans l'étage de traitement.

24. Machine selon une des revendications 1 à 15,
**caractérisée par** un dispositif d'empaquetage automatique pour les objets traités, qui place un enveloppement autour des objets.

25. Procédé pour l'élimination des bourgeons de rameaux sujets à améliorer, en particulier de vigne, comprenant l'étape suivante :
a) les rameaux sujets (1) sont placés l'un après l'autre dans la fente de paires de tambour de transport (14) qui poussent les rameaux sujets (1) le long d'un axe de passage (32) ; et l'étape caractéristique :
b) des brosses rotatives (20, 20a) disposées le long de l'axe de passage (32) enlèvent les bourgeons (2) du rameau sujet (1) transporté.
